(19) Europäisches Patentamt / European Patent Office / Office européen des brevets

(11) **EP 3 529 890 B1**

(12) **EUROPÄISCHE PATENTSCHRIFT**

(45) Veröffentlichungstag und Bekanntmachung des Hinweises auf die Patenterteilung:
**17.08.2022 Patentblatt 2022/33**

(21) Anmeldenummer: **17784908.0**

(22) Anmeldetag: **04.10.2017**

(51) Internationale Patentklassifikation (IPC):
**H02P 6/185** (2016.01)  **H02P 6/18** (2016.01)

(52) Gemeinsame Patentklassifikation (CPC):
**H02P 6/185; H02P 6/183**

(86) Internationale Anmeldenummer:
**PCT/EP2017/075130**

(87) Internationale Veröffentlichungsnummer:
**WO 2018/077579 (03.05.2018 Gazette 2018/18)**

(54) **REGELSYSTEM FÜR EINE SYNCHRONMASCHINE UND VERFAHREN ZUM BETREIBEN EINER SYNCHRONMASCHINE**

CONTROL SYSTEM FOR A SYNCHRONOUS MACHINE AND METHOD FOR OPERATING A SYNCHRONOUS MACHINE

SYSTÈME DE RÉGLAGE D'UNE MACHINE SYNCHRONE ET PROCÉDÉ POUR FAIRE FONCTIONNER UNE MACHINE SYNCHRONE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.10.2016 DE 102016220891**

(43) Veröffentlichungstag der Anmeldung:
**28.08.2019 Patentblatt 2019/35**

(73) Patentinhaber: **Robert Bosch GmbH**
**70442 Stuttgart (DE)**

(72) Erfinder: **PAULUS, Sebastian**
**73728 Esslingen Am Neckar (DE)**

(56) Entgegenhaltungen:
DE-A1-102010 053 098    DE-A1-102013 204 194
US-A1- 2014 327 379

• NICOLA BIANCHI ET AL: "Effect of stator and rotor saturation on sensorless rotor position detection", ENERGY CONVERSION CONGRESS AND EXPOSITION (ECCE), 2011 IEEE, IEEE, 17. September 2011 (2011-09-17), Seiten 1528-1535, XP032067357, DOI: 10.1109/ECCE.2011.6063963 ISBN: 978-1-4577-0542-7

• LINKE M ET AL: "Sensorless position control of permanent magnet synchronous machines without limitation at zero speed", IECON-2002. PROCEEDINGS OF THE 28TH. ANNUAL CONFERENCE OF THE IEEE INDUSTRIAL ELECTRONICS SOCIETY. SEVILLA, SPAIN, NOV. 5 - 8, 2002; [ANNUAL CONFERENCE OF THE IEEE INDUSTRIAL ELECTRONICS SOCIETY], IEEE, NEW YORK,NY, US, Bd. 1, 5. November 2002 (2002-11-05), Seiten 674-679, XP010633237, DOI: 10.1109/IECON.2002.1187588 ISBN: 978-0-7803-7474-4

**Beschreibung**

Die vorliegende Erfindung betrifft ein Regelsystem für eine Synchronmaschine und ein Verfahren zum Betreiben einer Synchronmaschine.

Stand der Technik

Elektrische Maschinen, insbesondere Synchronmaschinen, sind bei der Entwicklung von Antriebskonzepten für Elektro- und Hybridfahrzeugen von großer Bedeutung. Um ein gefordertes Drehmoment für eine Synchronmaschine bereitzustellen, wird im Stator der Maschine ein rotierendes magnetisches Feld erzeugt, welches sich synchron mit dem Rotor dreht. Für die Regelung der Synchronmaschine und die Erzeugung des magnetischen Feldes wird der aktuelle Winkel des Rotors benötigt. Der aktuelle Rotorwinkel kann dabei mittels eines zusätzlichen Winkelgebers oder mittels eines geberlosen Verfahrens zur Winkelbestimmung ermittelt werden.

Die Druckschrift NICOLA BIANCHI ET AL: "Effect of stator and rotor saturation on sensorless rotor position detection", ENERGY CONVERSION CONGRESS AND EXPOSITION (ECCE), 2011 IEEE, IEEE, 17. September2011 (2011-09-17), Seiten 1528-1535, XP032067357, DOI: 10.1109/ECCE.2011.6063963 ISBN: 978-1-4577-0542-7 offenbart die Auswirkungen der Sättigung auf die Fähigkeit einer sensorlosen Rotorwinkelbestimmung einer elektrischen Maschine. Die Motor-Geometrie wird modifiziert, um höhere Sättigungen im Rotor und Stator zu erzielen.

Die Druckschrift DE 10 2013 204 194 A1 offenbart ein Verfahren zum Betreiben einer Synchronmaschine. Hierbei wird eine Arbeitspunkttrajektorie der Synchronmaschine so eingestellt, dass eine Differenz zwischen d- und q-Induktivität der Synchronmaschine im rotorfesten Koordinatensystem möglichst hoch ist. Die Festlegung der Arbeitspunkttrajektorie der Synchronmaschine erfolgt anhand eines vorab zu bestimmenden Kennfelds über alle möglichen Zwei-Tupel an Nutzbestromungswerten im rotorfesten Koordinatensystem, in welchem die Amplitude der Systemantworten als Isohypsen aufgetragen sind.

Offenbarung der Erfindung

Die vorliegende Erfindung schafft ein Verfahren zum Betreiben einer Synchronmaschine mit den Merkmalen des Patentanspruchs 1 und ein Regelsystem für eine Synchronmaschine mit den Merkmalen des Patentanspruchs 4.

Demgemäß ist vorgesehen:
Ein Verfahren zum Betreiben einer Synchronmaschine mit einem Schritt zum Ermitteln eines Rotorwinkels der Synchronmaschine. Der Rotorwinkel der Synchronmaschine wird hierbei mittels einer geberlosen Rotorwinkeldetektion ermittelt. Das Verfahren umfasst ferner einen Schritt zum Bestimmen eines Differenzwertes zwischen einer Rotorinduktivität der Synchronmaschine in Polachsenrichtung (d-Achse) und einer Rotorinduktivität der Synchronmaschine in Pollückenrichtung (q-Achse) in einem rotorfesten Koordinatensystem der Synchronmaschine. Weiterhin umfasst das Verfahren einen Schritt zum Verwerfen des ermittelten Rotorwinkels, wenn die Amplitude der Differenz zwischen der Rotorinduktivität der Synchronmaschine in Polachsenrichtung und der Rotorinduktivität der Synchronmaschine in Pollückenrichtung einen vorgegebenen Grenzwert unterschreitet. Ferner umfasst das Verfahren einen Schritt zum Ansteuern der Synchronmaschine unter Verwendung des ermittelten Rotorwinkels, wenn die Amplitude der Differenz zwischen der Rotorinduktivität der Synchronmaschine in Polachsenrichtung und der Rotorinduktivität der Synchronmaschine in Polrückenrichtung den vorgegebenen Grenzwert nicht unterschreitet.

Weiterhin ist vorgesehen:

Ein Regelsystem für eine Synchronmaschine mit einer Regeleinrichtung, die dazu ausgelegt ist, eine feldorientierte Regelung der Synchronmaschine gemäß dem erfindungsgemäßen Verfahren zum Betreiben der Synchronmaschine durchzuführen.

Vorteile der Erfindung

Geberlose Verfahren zur Rotorwinkelbestimmung können als eine notwendige Eigenschaft einen signifikanten Unterschied zwischen der Rotorinduktivität in Polachsenrichtung und der Rotorinduktivität in Pollückenrichtung erfordern. Der vorliegenden Erfindung liegt dabei die Erkenntnis zugrunde, dass diese notwendige Eigenschaft mit einem zunehmenden Phasenstrom der Synchronmaschine erlischt. Verringert sich die Amplitude der Differenz zwischen der Rotorinduktivität in Polachsenrichtung und der Rotorinduktivität in Pollückenrichtung, so ist in diesem Bereich mit den entsprechenden Verfahren keine geberlose Rotorwinkelbestimmung mehr möglich. Als Folge können falsche Rotorwinkel ermittelt werden, die zu einer fehlerhaften Ansteuerung der Synchronmaschine führen.

Der vorliegenden Erfindung liegt daher die Idee zugrunde, dieser Erkenntnis Rechnung zu tragen und eine Diagnose für die Rotorwinkeldetektion vorzusehen, die überprüft, ob die notwendigen Bedingungen für die geberlose Rotorwinkelbestimmung eingehalten werden. Ist keine ausreichende Differenz zwischen den Rotorinduktivitäten in Polachsenrichtung und Pollückenrichtung vorhanden, so müssen die ermittelten Rotorwinkel als unzuverlässig betrachtet und verworfen werden. Ist dagegen eine ausreichende Differenz zwischen den Rotorinduktivitäten in Polachsenrichtung und Pollückenrichtung vorhanden, so kann der ermittelte Rotorwinkel als zuverlässig eingeschätzt und für eine Regelung der Synchronmaschine verwendet werden.

Durch die Überprüfung der notwendigen Bedingung für eine geberlose Rotorwinkelbestimmung können mögliche Fehler bei der Rotorwinkelbestimmung frühzeitig erkannt werden und eine fehlerhafte Ansteuerung der Synchronmaschine kann vermieden werden. Insbesondere kann bei einem Fehlen der notwendigen Bedingungen für eine zuverlässige Rotorwinkelbestimmung die Ansteuerung der Synchronmaschine auch derart modifiziert werden, dass die erforderliche Differenz in den Rotorinduktivitäten wieder hergestellt werden kann. Auf diese Weise kann die Zuverlässigkeit des Betriebs der Synchronmaschine über einen weiten Einsatzbereich hinweg gewährleistet werden.

Erfindungsgemäß umfasst der Schritt zum Ermitteln des Rotorwinkels mittels einer geberlosen Rotorwinkeldetektion ein Einbringen von hochfrequenten Testspannungssignalen in Polachsenrichtung. Weiterhin umfasst der Schritt zum Ermitteln des Rotorwinkels ein Messen der Systemantworten auf die eingeprägten hochfrequenten Testspannungssignale und eine Winkelschätzung unter Verwendung der gemessenen Systemantworten. Auf diese Weise kann eine geberlose Bestimmung des Rotorwinkels der Synchronmaschine erfolgen, ohne dass in der Synchronmaschine ein spürbares Drehmoment eingeprägt wird.

Erfindungsgemäß umfasst der Schritt zum Bestimmen des Differenzwertes zwischen den Rotorinduktivitäten in Polachsenrichtung und Pollückenrichtung ein Einprägen von hochfrequenten Testspannungssignalen in eine von der Polachsenrichtung abweichende Richtung. Weiterhin umfasst der Schritt ein Messen der Systemantworten auf die eingeprägten hochfrequenten Signale und eine Winkelschätzung unter Verwendung der gemessenen Systemantworten. Auf diese Weise kann der Differenzwert der Rotorinduktivitäten effizient und ohne ein nennenswertes Drehmoment bestimmt werden.

Erfindungsgemäß weisen die hochfrequenten Testspannungssignale für das Ermitteln des Rotorwinkels und die hochfrequenten Testspannungssignale für das Bestimmen des Differenzwertes der Rotorinduktivitäten unterschiedliche Arbeitsfrequenzen auf. Insbesondere ist die Arbeitsfrequenz der Testsignale für das Bestimmen des Differenzwertes der Rotorinduktivitäten signifikant verschieden von der Arbeitsfrequenz für das Ermitteln des Rotorwinkels. Beispielsweise kann die Arbeitsfrequenz für die geberlose Winkelbestimmung des Rotorwinkels im Bereich von 1 kHz liegen, während die Arbeitsfrequenz für die Bestimmung des Differenzwertes der Rotorinduktivitäten im Bereich von ca. 10 kHz liegt.

Gemäß einer Ausführungsform umfasst das Verfahren einen Schritt zum Modifizieren des ermittelten Rotorwinkels, wenn die Amplitude der Differenz zwischen der Rotorinduktivität der Synchronmaschine in Polachsenrichtung und der Rotorinduktivität der Synchronmaschine in Pollückenrichtung einen vorgegebenen Grenzwert unterschreitet. Durch das Modifizieren des ermittelten (geschätzten) Rotorwinkels werden auch die Ströme in d- und q-Richtung modifiziert, das heißt vergrößert oder verkleinert. Das Modifizieren des geschätzten Rotorwinkels und somit auch der Ströme kann dabei insbesondere solange erfolgen, bis sich wieder ein ausreichend großer Differenzwert zwischen den Rotorinduktivitäten der Synchronmaschine in Polachsenrichtung und Pollückenrichtung einstellt.

Gemäß einer Ausführungsform wird in dem Schritt zum Verwerfen des ermittelten Rotorwinkels der Rotorwinkel dann verworfen, wenn die Amplitude der Differenz zwischen der Rotorinduktivität der Synchronmaschine in Polachsenrichtung und der Rotorinduktivität der Synchronmaschine in Pollückenrichtung kleiner ist als eine zuvor bestimmte Differenz der Rotorinduktivitäten. Auf diese Weise kann unmittelbar nachdem eine Verkleinerung der Differenz zwischen Rotorinduktivitäten festgestellt wird, eine entsprechende Gegenmaßnahme eingeleitet werden.

Die obigen Ausgestaltungen und Weiterbildungen lassen sich, soweit sinnvoll, beliebig miteinander kombinieren. Weitere Ausgestaltungen, Weiterbildungen und Implementierungen der Erfindung umfassen auch nicht explizit genannte Kombinationen von zuvor oder im Folgenden bezüglich den Ausführungsbeispielen beschriebenen Merkmalen der Erfindung. Insbesondere wird der Fachmann dabei auch Einzelaspekte als Verbesserungen oder Ergänzungen zu den jeweiligen Grundformen der vorliegenden Erfindung hinzufügen.

Kurze Beschreibung der Zeichnungen

Die vorliegende Erfindung wird nachfolgend anhand der in schematischen Figuren der Zeichnungen angegebenen Ausführungsbeispiele näher erläutert. Dabei zeigen:

Figur 1:    eine schematische Darstellung eines Regelungssystems für eine Synchronmaschine gemäß einer Ausführungsform;

Figur 2:    eine schematische Darstellung eines Kennfelds für die Abhängigkeit der Induktivitätsdifferenz zwischen q- und d-Induktivität einer Synchronmaschine von den Nutzbestromungswerten; und

Figur 3:    eine schematische Darstellung eines Ablaufdiagramms für ein Verfahren zum Betreiben einer Synchronmaschine gemäß einer Ausführungsform.

Ausführungsformen der Erfindung

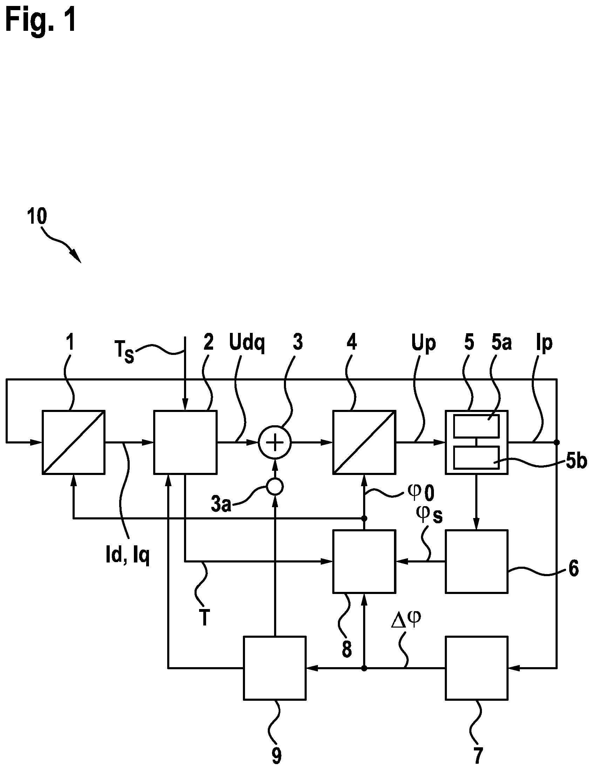

Fig. 1 zeigt eine schematische Darstellung eines Regelungssystems 10 für eine elektrische Antriebseinheit 5 mit einem Wechselrichter 5a, der eine Synchronmaschine 5b mit Drehstrom speist.

Die Synchronmaschine 5b kann beispielsweise eine dreiphasige Synchronmaschine sein. Es ist jedoch prinzipiell auch möglich, eine andere Anzahl von Phasen für die Synchronmaschine vorzusehen. Dabei spielt die Regelung der Synchronmaschine 5b in der elektrischen Antriebseinheit 5 eine zentrale Rolle. Um ein gefordertes Drehmoment mit einer Synchronmaschine 5b bereitzustellen, wird im Stator der Maschine ein rotierendes elektrisches Feld erzeugt, welches sich synchron mit dem Rotor dreht. Für die Erzeugung dieses Feldes wird der aktuelle Winkel des Rotors für die Regelung benötigt.

Das Regelungssystem 10 umfasst daher eine Regelungseinrichtung 2, welche eine feldorientierte Regelung der Synchronmaschine 5b bzw. des Wechselrichters 5a der Antriebseinheit im rotorfesten d, q-Koordinatensystem durchführt. Dazu wird die Regelungseinrichtung 2 mit einem Solldrehmoment Ts gespeist und greift auf die momentanen Nutzbestromungswerte Iq, Id im rotorfesten d, q-Koordinatensystem zurück, die durch eine erste Transformationseinrichtung 1 bereitgestellt werden. Die erste Transformationseinrichtung 1 misst dazu die Phasenströme Ip der Synchronmaschine 5b und transformiert die Phasenströme Ip in die Nutzbestromungswerte Iq, Id.

Die Regelungseinrichtung 2 gibt Ansteuerspannungen Udq im rotorfesten d, q-Koordinatensystem der Synchronmaschine 5b an eine zweite Transformationseinrichtung 4 ab, die eine entsprechende Transformation der Ansteuerspannungen Udq in Phasenansteuerspannungen Up für die Synchronmaschine 5b vornimmt. Sowohl die erste Transformationseinrichtung 1 als auch die zweite Transformationseinrichtung 4 greifen zur Transformation auf den zeitabhängigen Rotorwinkel $\varphi 0$ des Rotors der Synchronmaschine 5b in Bezug auf den Stator der Synchronmaschine 5b zurück. Dieser Rotorwinkel $\varphi 0$ wird durch einen Beobachter 8 generiert, der wiederum auf einen ermittelten Rotorwinkel $\varphi s$ eines Lagesensors 6 und/oder auf eine Rotorwinkeldifferenz $\Delta \varphi$, welche durch einen Winkelschätzalgorithmus 7 in Abhängigkeit von gemessenen Systemantworten der Synchronmaschine 5b ermittelt wird, zurückgreifen kann.

Der Lagesensor 6 kann beispielsweise elektrische Betriebsparameter der Synchronmaschine 5b erfassen, beispielsweise durch Erfassung der Spannung am Sternpunkt der Synchronmaschine 5b. Der Beobachter 8 kann beispielsweise einen Kalman-Beobachter, einen Luenberger-Beobachter, einen Hautus-Beobachter oder einen Gilbert-Beobachter zur Stützung und Plausibilisierung der Winkelbeobachtung $\varphi 0$ aufweisen.

Für die Speisung des Winkelschätzalgorithmus 7 ist zwischen Regelungseinrichtung 2 und zweiter Transformationseinrichtung 4 ein Summierglied 3 vorgesehen, mithilfe dessen beispielsweise Testspannungspulse ud, uq einer bestimmten Arbeitsfrequenz $\omega c$ auf die Ansteuerspannungen Udq aufmoduliert werden können. Diese Testspannungspulse ud, uq können an einem Eingangsanschluss 3a durch eine Steuereinrichtung 9 eingespeist werden, die die beobachtete Winkeldifferenz des Winkelschätzalgorithmus 7 entgegennehmen kann.

Das Regelungssystem 10 eignet sich ebenfalls für jede andere Art von geberlosen Rotorwinkelbestimmungsverfahren, das heißt, alternativ zur Einspeisung von Testspannungspulsen ud, uq können auch andere Methoden genutzt werden, um die Messung von Systemantworten zu ermöglichen. Beispielsweise können durch Messungen von Spannungen im Sternpunkt zu geeigneten Zeitpunkten in einer pulsbreitenmodulierten Phasenansteuerung Systemantworten zur Rotorwinkelbestimmung herangezogen werden. Es kann auch möglich sein, Testsignalverfahren zur Rotorwinkelbestimmung heranzuziehen, wobei Testsignale einer hohen Arbeitsfrequenz auf das Ansteuersignal aufmoduliert werden. Generell ist jedes geberlose Bestimmungsverfahren, welches auf einer Differenz zwischen Rotorinduktivität Ld in Polachsenrichtung und der Rotorinduktivität Lq in Pollückenrichtung der Synchronmaschine 5b beruht, dazu geeignet, den Winkelschätzalgorithmus 7 zur Auswertung der Winkeldifferenz zu speisen.

Die Systemantwort der Synchronmaschine 5b hängt unter anderem von der Nutzbestromung ab, deren Wert die Differenz zwischen Rotorinduktivität Ld in Polachsenrichtung und der Rotorinduktivität Lq in Pollückenrichtung beeinflusst. Die Längsströme Id und Querströme Iq einer permanent erregten Synchronmaschine verhalten sich abhängig von der Rotorinduktivität Ld in Polachsenrichtung und der Rotorinduktivität Lq in Pollückenrichtung und der anliegenden Spannung Ud bzw. Uq wie folgt:

$$dId/dt = Ld^{-1} \cdot Ud - R \cdot Ld^{-1} \cdot Id + Lq \cdot Ld^{-1} \cdot \omega_e \cdot Iq$$

$$dIq/dt = Lq^{-1} \cdot Uq - R \cdot Lq^{-1} \cdot Iq + Ld \cdot Lq^{-1} \cdot \omega_e \cdot Id - Lq_-^{1} \cdot u\_p$$

Dies gilt bei der Winkelgeschwindigkeit $\omega$e des Rotors der Synchronmaschine 5b, des Ohm'schen Widerstands R sowie der Polradspannung u_p. Darüber hinaus wird davon ausgegangen, dass der bzw. die Polschuhe nicht in Sättigung betrieben werden, das heißt, dass die Beziehung zwischen Strom und magnetischen Fluss linear ist und die jeweilige Induktivität nicht von der Stromstärke abhängig ist.

Bei hoher Nutzbestromung der Synchronmaschine 5b jedoch kann es zu einer fortschreitenden Sättigung des Rotorkerns der Synchronmaschine 5b kommen, so dass die Beziehung zwischen Strom und magnetischem Fluss eine Nichtlinearität aufweist. Insbesondere kann es bei bestimmten 2-Tupeln der Nutzbestromung Id, Iq im rotorfesten Koordinatensystem passieren, dass die Differenz zwischen Rotorinduktivität Ld in Polachsenrichtung und der Rotorinduktivität Lq in Pollückenrichtung verschwindet. Geberlose Rotorwinkelbestimmungsverfahren, welche auf diese Induktivitätsdifferenz angewiesen sind, um aussagekräftige Messwerte zu erhalten, können bei derartigen Arbeitspunkten an Relevanz verlieren.

Ein beispielhaftes solcher Rotorwinkelbestimmungsverfahren sei im Folgenden illustriert. Zur Bestimmung des Winkelfehlers $\Delta\varphi$ wird das folgende Testsignal [ud, uq] an die Synchronmaschine 5b angelegt:

$$[ud, uq] = uc \cdot \cos(\omega c\, t) \cdot [\cos(\Delta\varphi), \sin(\Delta\varphi)]$$

Da das elektrische Verhalten der Synchronmaschine 5b für hohe Frequenzen als rein induktive Last beschrieben werden kann, ergibt sich als Systemantwort auf das Testsignal [$u_d$, $u_q$] folgender Stromvektor [id, iq]

$$[id, iq] = (uc/\omega c) \cdot \sin(\omega c\, t) \cdot [\cos(\Delta\varphi)/Ld, \sin(\Delta\varphi)/Lq]$$

Um aus diesen Strömen per Signalverarbeitung eine Winkelinformation zu extrahieren, wird der Zusammenhang zwischen den gemessenen Phasenströmen im statorfesten Koordinatensystem der Synchronmaschine 5b und den Strömen im rotorfesten Koordinatensystem benötigt. In Abhängigkeit von der geschätzten d-Richtung der Synchronmaschine 5b ergibt sich für die Ströme im rotorfesten Koordinatensystem:

$$[id, iq] = uc/(4\,\omega c\, Lq\, Ld) \cdot$$

$$[(Lq - Ld)(\sin(\omega c\, t - 2\Delta\varphi) + \sin(\omega c\, t + 2\Delta\varphi)) + 2(Lq + Ld)(\sin(2\omega c\, t),$$

$$(Lq - Ld)(\sin(\omega c\, t - 2\Delta\varphi) + \sin(\omega c\, t + 2\Delta\varphi)) + 2(Lq + Ld)(\sin(2\omega c\, t)]$$

Um die gewünschten Terme mit der Winkeldifferenzinformation $\Delta\varphi$ aus den gemessenen Werten der Ströme [id, iq] im rotorfesten Koordinatensystem zu extrahieren, kann nach einer Hochpassfilterung, einer Konvolution mit der Arbeitsfrequenz $\omega$c, und einer darauffolgenden Tiefpassfilterung derjenige Term erhalten werden, welcher die Winkeldifferenzinformation $\Delta\varphi$ enthält:

$$[id, iq] = u_d/(4\omega c\, Lq\, Ld) \cdot$$

$$[(Lq - Ld)(\sin(2\Delta\varphi)), (Lq - Ld)(\cos(2\Delta\varphi) + (Lq + Ld)]$$

Wie sich leicht erkennen lässt, hängt die Aussagekraft der gemessenen Phasenströme im Hinblick auf die Winkeldifferenzinformation $\Delta\varphi$ von der Differenz der Induktivitäten Lq und Ld ab - je geringer die Differenz, desto ungenauer die Bestimmung der Winkeldifferenz $\Delta\varphi$.

Um diesem Phänomen entgegenzuwirken, ist es vorteilhaft, die Arbeitspunkte der Synchronmaschine 5b möglichst so zu wählen, dass die Differenz der Induktivitäten Lq und Ld möglichst groß bleibt, das heißt, dass die Synchronmaschine 5b nach Möglichkeit auch bei hohen Drehmomenten nicht in Sättigung betrieben wird.

Wie durch die vorausgegangenen Ausführungen zu erkennen ist, ist für die Bestimmung der Winkelinformation des Rotorwinkels die Differenz Lq - Ld zwischen der q-Induktivität (Rotorinduktivität in Pollückenrichtung) und der d-Induktivität (Rotorinduktivität in Polradachsenrichtung) entscheidend. Diese Differenz der Induktivitäten kann bestimmt werden, indem das geberlose Rotorwinkeldetektionsverfahren zu Diagnosezwecken kurzzeitig mit einem von 0 Grad abweichenden Winkel betrieben wird. In diesem Fall erfolgt das Einprägen des hochfrequenten Testspannungssignals, sowie dessen Auswertung, nicht mehr in die d-Richtung, sondern vielmehr in eine von der d-Richtung abweichende Richtung. Insbesondere kann für die Bestimmung des Differenzwertes der Rotorinduktivitäten eine beliebige Anzahl von abweichenden Testwinkeln verwendet werden. So können beispielsweise n Testwinkel mit einem äquidistanten Winkelabstand von 360:n Grad verwendet werden. Beispielsweise kann ein Satz von Testwinkeln mit 0 Grad, 15 Grad, 30 Grad,... verwendet werden. Ebenso sind beispielsweise Testwinkel von 0 Grad, 45 Grad, 90 Grad,... möglich.

Erfolgt die Diagnose des Differenzwertes zwischen den Rotorinduktivitäten der Synchronmaschine 5b analog zu der geberlosen Rotorwinkeldetektion, so sollten die Frequenzbereiche für die Arbeitsfrequenz der eingeprägten Testspannungsimpulse einen ausreichend großen Abstand voneinander haben. Beispielsweise kann das Testsignal für die geberlose Rotorwinkelbestimmung mit einer Frequenz von ca. 1 kHz ausgeführt werden. Hierbei erfolgt das Einprägen der Testspannungssignale in die d-Richtung. Für die Überprüfung des Differenzwertes der Rotorinduktivitäten kann in diesem Fall beispielsweise eine Frequenz von ca. 10 kHz verwendet werden, wobei die Testspannungssignale mit variierenden, von der d-Richtung abweichenden Richtung eingeprägt werden. Auf diese Weise kann eine synchrone geberlose Rotorwinkelbestimmung und eine gleichzeitige Überprüfung des Differenzwertes der Rotorinduktivitäten durchgeführt werden. Alternativ kann auch abwechselnd zwischen einem Winkelbestimmungsmodus zur Ermittlung des Rotorwinkels und einem Diagnosemodus zur Bestimmung des Differenzwertes der Rotorinduktivitäten hin und her gewechselt werden.

Wird bei der Diagnose des Differenzwertes zwischen den Rotorinduktivitäten der Synchronmaschine festgestellt, dass die Rotorinduktivität in d-Richtung (Polachsenrichtung) und der Rotorinduktivität der Synchronmaschine in q-Richtung (Pollückenrichtung) unter einen vorgegebenen Grenzwert sinkt (gegen Null geht), so ist aus den oben beschriebenen Gründen, keine aussagekräftige Bestimmung des Rotorwinkels der Synchronmaschine 5b möglich. Daher wird in diesem Fall der ermittelte Rotorwinkel verworfen und fließt somit nicht in den Regelvorgang zur Ansteuerung der Synchronmaschine ein. Andernfalls besteht die Gefahr, dass das geberlose Verfahren zur Rotorwinkeldetektion einen fehlerhaften Rotorwinkel ermittelt und dieser fehlerhafte Rotorwinkel zu Instabilitäten in der Ansteuerung der Synchronmaschine 5b führen kann.

Liegt der Differenzwert zwischen den Rotorinduktivitäten in q-Richtung und d-Richtung dagegen oberhalb des vorgegebenen Grenzwerts, so ist eine zuverlässige geberlose Rotorwinkeldetektion möglich. In diesem Fall kann der ermittelte Rotorwinkel für die Ansteuerung der Synchronmaschine verwendet werden.

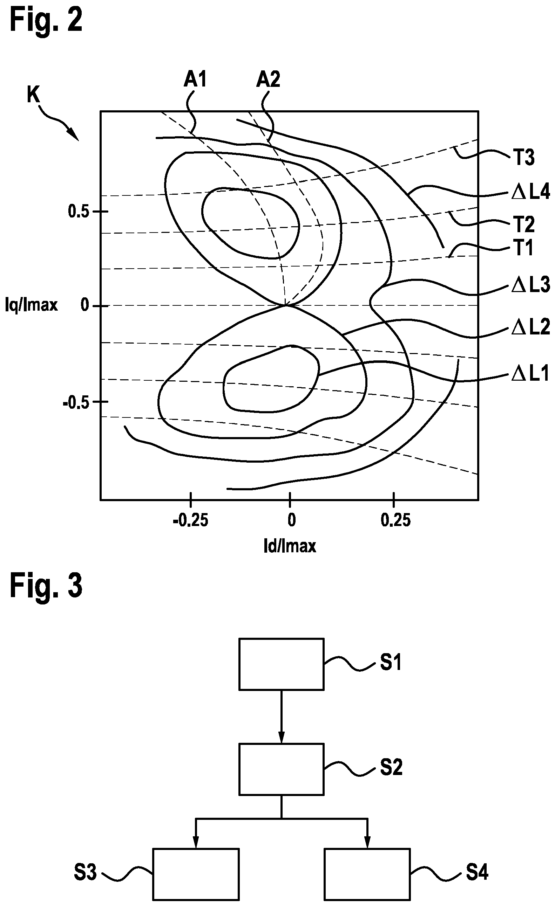

Figur 2 zeigt eine schematische Darstellung eines Kennfelds K für die Abhängigkeit der Induktivitätsdifferenz zwischen der d- und q-Induktivität einer Synchronmaschine von dem Nutzbestromungswert Id und Iq. In diesem Kennfeld K sind die Amplituden der Systemantworten aus den zuvor beschriebenen Testspannungsimpulsen als Differenzwert der Induktivitäten dargestellt - beispielsweise als Isohypsen ΔL1, ΔL2, ΔL3 und ΔL4. Hierbei zeigt zum Beispiel die Isohypse ΔL1 eine geringere Induktivitätsdifferenz, während die Isohypsen ΔL2 bis ΔL4 jeweils stetig ansteigende Induktivitätsdifferenzen aufweisen. Für ein vorgegebenes Drehmoment können verschiedene Unterkombinationen aus den Nutzbestromungswerten Id und Iq ausgewählt werden. Dies ist beispielsweise durch die gepunkteten Linien T1, T2 und T3 angedeutet. Für drehmomentabhängige Arbeitspunkte ist beispielsweise eine Arbeitspunkttrajektorie A1 vorgesehen, welche gemäß einem Maximum Torque per Ampere (MTPA) -Verfahren festgelegt wird.

Wie allerdings aus dem Verlauf der Arbeitspunkttrajektorie A1 zu erkennen ist, verläuft diese durch einen Arbeitspunktbereich mit einer geringen Induktivitätsdifferenz, der hier durch den Bereich ΔL1 gekennzeichnet ist.

Wird durch das zuvor beschriebene Verfahren festgestellt, dass die Synchronmaschine in dem Bereich ΔL1 betrieben wird, so ist hier keine zuverlässige geberlose Rotorwinkelbestimmung möglich. Daher kann, falls der Differenzwert der Rotorinduktivitäten unterhalb einen vorgegebenen Grenzwert sinkt, auf eine andere drehmomentabhängige Arbeitspunkttrajektorie, beispielsweise die Arbeitspunkttrajektorie A2 gewechselt werden. Auf diese Weise kann mittels der Information über den Differenzwert zwischen den Rotorinduktivitäten der Synchronmaschine die Ansteuerung der Synchronmaschine stabilisiert werden.

Figur 3 zeigt eine schematische Darstellung eines Ablaufdiagramms, wie es einem Verfahren zum Betreiben einer Synchronmaschine gemäß einer Ausführungsform zugrunde liegt. In Schritt S1 wird mittels eines geberlosen Rotorwinkeldetektionsverfahrens ein Rotorwinkel der Synchronmaschine ermittelt. Dies kann beispielsweise mittels des zuvor beschriebenen Rotorwinkeldetektionsverfahrens erfolgen.

In Schritt S2 wird ein Differenzwert zwischen der Rotorinduktivität der Synchronmaschine in d-Richtung (Polachsenrichtung) und einer Rotorinduktivität der Synchronmaschine in q-Richtung (Pollückenrichtung) bestimmt. Die Bestimmung des Differenzwertes erfolgt hierbei in einem rotorfesten Koordinatensystem (d-q-Koordinatensystem) der Synchronmaschine. Die Bestimmung des Differenzwertes kann auf die zuvor beschriebene Weise durch Einprägen von hochfrequenten Testspannungssignalen in eine von der d-Richtung abweichenden Richtung erfolgen.

Anschließend erfolgt eine Überprüfung des ermittelten Differenzwertes der Rotorinduktivitäten. Unterschreitet der Differenzwert der Rotorinduktivitäten einen vorgegebenen Grenzwert, so wird in Schritt S3 der ermittelte Rotorwinkel verworfen und fließt nicht in die Regelung zur Ansteuerung der Synchronmaschine ein.

Ist der Differenzwert der Rotorinduktivitäten dagegen größer als der vorgegebene Grenzwert, so kann der ermittelte Rotorwinkel als zuverlässig klassifiziert werden und in die Ansteuerung der Synchronmaschine einfließen.

Zusätzlich oder alternativ zu einem Vergleich des Differenzwertes der Rotorinduktivitäten mit einem vorgegebenen Grenzwert ist es auch möglich, den ermittelten Differenzwert der Rotorinduktivität mit einem zuvor ermittelten Differenzwert der Rotorinduktivitäten zu vergleichen. Wird dabei festgestellt, dass der Differenzwert der Rotorinduktivitäten abnimmt, so kann dies bereits auf eine sich anberaumende Instabilität bei der Rotorwinkeldetektion hinweisen. Entsprechend können bei einem abnehmenden Differenzwert der Rotorinduktivitäten bereits entsprechende Gegenmaßnahmen eingeleitet werden, um die Stabilität der Regelung für die Synchronmaschine aufrecht zu erhalten.

Zusammenfassend betrifft die vorliegende Erfindung ein Regelsystem und ein Verfahren zum Betreiben einer Synchronmaschine. Insbesondere erfolgt die Ansteuerung der Synchronmaschine dabei basierend auf einem Rotorwinkel, der mittels eines geberlosen Rotorwinkeldetektionsverfahrens ermittelt wurde. Um die Zuverlässigkeit des geberlos ermittelten Rotorwinkels zu überprüfen, wird der Differenzwert zwischen den Rotorinduktivitäten in q-Richtung und d-Richtung überwacht. Unterschreitet dieser Differenzwert einen Grenzwert, so weist dies auf mögliche Instabilitäten bei der Bestimmung des Rotorwinkels hin.

## Patentansprüche

1. Verfahren zum Betreiben einer Synchronmaschine, mit den Schritten:

   Ermitteln (S1) eines Rotorwinkels der Synchronmaschine mittels einer geberlosen Rotorwinkeldetektion;
   Bestimmen (S2) eines Differenzwertes zwischen einer Rotorinduktivität der Synchronmaschine in Polachsenrichtung und einer Rotorinduktivität der Synchronmaschine in Pollückenrichtung in einem rotorfesten Koordinatensystem der Synchronmaschine;
   Verwerfen (S3) des ermittelten Rotorwinkels, wenn eine Amplitude der Differenz zwischen der Rotorinduktivität der Synchronmaschine in Polachsenrichtung und der Rotorinduktivität der Synchronmaschine in Pollückenrichtung einen vorgegebenen Grenzwert unterschreitet; und
   Ansteuern (S4) der Synchronmaschine unter Verwendung des ermittelten Rotorwinkels, wenn die Amplitude der Differenz zwischen der Rotorinduktivität der Synchronmaschine in Polachsenrichtung und der Rotorinduktivität der Synchronmaschine in Pollückenrichtung den vorgegebenen Grenzwert nicht unterschreitet;
   wobei der Schritt (S1) zum Ermitteln des Rotorwinkels ein Einprägen von hochfrequenten Testspannungssignale in Polachsenrichtung, ein Messen der Systemantworten auf die eingeprägten hochfrequenten Testspannungssignale und eine Winkelschätzung unter Verwendung der gemessenen Systemantworten umfasst;
   wobei der Schritt (S2) zum Bestimmen des Differenzwertes ein Einprägen von hochfrequenten Testspannungssignale in eine von der Polachsenrichtung abweichende Richtung, ein Messen der Systemantworten auf die eingeprägten hochfrequenten Signale und eine Winkelschätzung unter Verwendung der gemessenen Systemantworten umfasst;
   **dadurch gekennzeichnet, dass**
   die hochfrequenten Testspannungssignale für das Ermitteln des Rotorwinkels und die die hochfrequenten Testspannungssignale für das Bestimmen des Differenzwerts unterschiedliche Arbeitsfrequenzen aufweisen.

2. Verfahren nach Anspruch 1, mit dem Schritt:
   Modifizieren des ermittelten Rotorwinkels, wenn die Amplitude der Differenz zwischen der Rotorinduktivität der Synchronmaschine in Polachsenrichtung und der Rotorinduktivität der Synchronmaschine in Pollückenrichtung den vorgegebenen Grenzwert unterschreitet.

3. Verfahren einem der Ansprüche 1 bis 2, wobei der Schritt (S3) zum Verwerfen des ermittelten Rotorwinkel den ermittelten Rotorwinkel verwirft, wenn die Amplitude der Differenz zwischen der Rotorinduktivität der Synchronmaschine in Polachsenrichtung und der Rotorinduktivität der Synchronmaschine in Pollückenrichtung kleiner ist, als eine zuvor bestimmte Differenz der Rotorinduktivitäten.

4. Regelsystem (10) für eine Synchronmaschine (5b), mit:
   einer Regeleinrichtung (2), die dazu ausgelegt ist, eine feldorientierte Regelung der Synchronmaschine (5b) gemäß dem Verfahren nach einem der Ansprüche 1 bis 3 durchzuführen.

## Claims

1. Method for operating a synchronous machine, having the following steps:

ascertaining (S1) a rotor angle of the synchronous machine by way of sensor-free rotor angle detection;

determining (S2) a difference value between a rotor inductance of the synchronous machine in the pole axis direction and a rotor inductance of the synchronous machine in the pole gap direction in a coordinate system, fixed to the rotor, of the synchronous machine;

discarding (S3) the ascertained rotor angle if an amplitude of the difference between the rotor inductance of the synchronous machine in the pole axis direction and the rotor inductance of the synchronous machine in the pole gap direction lies below a predefined limit value; and

driving (S4) the synchronous machine using the ascertained rotor angle if the amplitude of the difference between the rotor inductance of the synchronous machine in the pole axis direction and the rotor inductance of the synchronous machine in the pole gap direction does not lie below the predefined limit value;

wherein the step (S1) for ascertaining the rotor angle comprises applying high-frequency test voltage signals in the pole axis direction, measuring the system responses to the applied high-frequency test voltage signals and estimating an angle using the measured system responses;

wherein the step (S2) for determining the difference value comprises applying high-frequency test voltage signals in a direction differing from the pole axis direction, measuring the system responses to the applied high-frequency signals and estimating an angle using the measured system responses;

**characterized in that**

the high-frequency test voltage signals for ascertaining the rotor angle and the high-frequency test voltage signals for determining the difference value have different operating frequencies.

2. Method according to Claim 1, having the following step:
modifying the ascertained rotor angle if the amplitude of the difference between the rotor inductance of the synchronous machine in the pole axis direction and the rotor inductance of the synchronous machine in the pole gap direction lies below the predefined limit value.

3. Method according to either of Claims 1 and 2, wherein the step (S3) for discarding the ascertained rotor angle discards the ascertained rotor angle if the amplitude of the difference between the rotor inductance of the synchronous machine in the pole axis direction and the rotor inductance of the synchronous machine in the pole gap direction is smaller than a previously determined difference in the rotor inductances.

4. Control system (10) for a synchronous machine (5b), having:
a control apparatus (2) that is designed to perform field-oriented control of the synchronous machine (5b) in accordance with the method according to one of Claims 1 to 3.

**Revendications**

1. Procédé permettant de faire fonctionner une machine synchrone, comprenant les étapes consistant à :

établir (S1) un angle de rotor de la machine synchrone au moyen d'une détection d'angle de rotor sans codeur ;

déterminer (S2) une valeur différentielle entre une inductance de rotor de la machine synchrone dans le sens de l'axe polaire et une inductance de rotor de la machine synchrone dans le sens de l'espace interpolaire dans un système de coordonnées solidaire du rotor de la machine synchrone ;

rejeter (S3) l'angle de rotor établi si une amplitude de la différence entre l'inductance de rotor de la machine synchrone dans le sens de l'axe polaire et l'inductance de rotor de la machine synchrone dans le sens de l'espace interpolaire passe en dessous d'une valeur limite prédéfinie ; et

piloter (S4) la machine synchrone en utilisant l'angle de rotor établi si l'amplitude de la différence entre l'inductance de rotor de la machine synchrone dans le sens de l'axe polaire et l'inductance de rotor de la machine synchrone dans le sens de l'espace interpolaire ne passe pas en dessous de la valeur limite prédéfinie ;

l'étape (S1) consistant à établir l'angle de rotor comprenant une application de signaux de tension d'essai haute fréquence dans le sens de l'axe polaire, une mesure des réponses du système aux signaux de tension d'essai haute fréquence appliqués et une estimation d'angle en utilisant les réponses du système mesurées ;

l'étape (S2) consistant à déterminer la valeur différentielle comprenant une application de signaux de tension d'essai haute fréquence dans un sens différent du sens de l'axe polaire, une mesure des réponses du système aux signaux haute fréquence appliqués et une estimation d'angle en utilisant les réponses du système mesurées ;

**caractérisé en ce que** les signaux de tension d'essai haute fréquence servant à l'établissement de l'angle de rotor et les signaux de tension d'essai haute fréquence servant à la détermination de la valeur différentielle présentent des fréquences de fonctionnement différentes.

2. Procédé selon la revendication 1, comprenant l'étape consistant à :
modifier l'angle de rotor établi si l'amplitude de la différence entre l'inductance de rotor de la machine synchrone dans le sens de l'axe polaire et l'inductance de rotor de la machine synchrone dans le sens de l'espace interpolaire passe en dessous de la valeur limite prédéfinie.

3. Procédé selon l'une quelconque des revendications 1 à 2, dans lequel l'étape (S3) consistant à rejeter l'angle de rotor établi rejette l'angle de rotor établi si l'amplitude de la différence entre l'inductance de rotor de la machine synchrone dans le sens de l'axe polaire et l'inductance de rotor de la machine synchrone dans le sens de l'espace interpolaire est inférieure à une différence des inductances de rotor déterminée auparavant.

4. Système de régulation (10) pour une machine synchrone (5b), comprenant :
un dispositif de régulation (2) qui est conçu pour effectuer une régulation à orientation de champ de la machine synchrone (5b) selon le procédé selon l'une quelconque des revendications 1 à 3.

# Fig. 1

# Fig. 2

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013204194 A1

**In der Beschreibung aufgeführte Nicht-Patentliteratur**

- Effect of stator and rotor saturation on sensorless rotor position detection. **NICOLA BIANCHI et al.** ENERGY CONVERSION CONGRESS AND EXPOSITION (ECCE), 2011 IEEE. IEEE, 17. September 2011, 1528-1535